(19) Europäisches Patentamt
European Patent Office
Office européen des brevets

(11) Veröffentlichungsnummer: **0 079 562**
**B1**

(12) # EUROPÄISCHE PATENTSCHRIFT

(45) Veröffentlichungstag der Patentschrift: **29.05.85**

(51) Int. Cl.⁴: **C 09 B 62/513**, C 09 B 62/09, D 06 P 3/66, D 06 P 3/10

(21) Anmeldenummer: **82110309.0**

(22) Anmeldetag: **09.11.82**

(54) **Wasserlösliche Disazoverbindungen, Verfahren zu ihrer Herstellung und ihre Verwendung als Farbstoffe.**

(30) Priorität: **12.11.81 DE 3144940**

(43) Veröffentlichungstag der Anmeldung: **25.05.83 Patentblatt 83/21**

(45) Bekanntmachung des Hinweises auf die Patenterteilung: **29.05.85 Patentblatt 85/22**

(84) Benannte Vertragsstaaten: **CH DE FR GB IT LI**

(56) Entgegenhaltungen:
**EP - A - 0 014 432**
**GB - A - 2 008 144**

(73) Patentinhaber: **HOECHST AKTIENGESELLSCHAFT, Postfach 80 03 20, D-6230 Frankfurt am Main 80 (DE)**

(72) Erfinder: **Fuchs, Hermann, Dr., Altenhainer Strasse 2, D-6240 Königstein/Taunus (DE)**

EP 0 079 562 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem technischen Gebiet der Azofarbstoffe, die faserreaktive Eigenschaften besitzen.

Die Europäische Patentanmeldungs-Veröffentlichung Nr. 0 014 432 A2 beschreibt Disazofarbstoffe, die aus einer Bis-(aminophenoxy)-methan- oder Bis-(amino-nitrophenoxy)-methan-Verbindung als Tetrazokomponente und aus zwei Äquivalenten einer wasserlöslichen, eine faserreaktive Gruppe enthaltenden Kupplungskomponente aufgebaut sind.

Aus der britischen Patentanmeldungsveröffentlichung Nr. 2 008 144 A sind aus den Beispielen 222 bis 229 Disazofarbstoffe bekannt, die aus zwei Monoazokomponenten bestehen, die über die Aminogruppen der 1-Amino-8-hydroxynaphthalin-3,6-disulfonsäure als deren Kupplungskomponente und jeweils einem Chlortriazinrest mit den Aminogruppen des $\alpha,\beta$-Bis-(4-aminophenoxy)-äthans als Brückenglied miteinander verbunden sind. Die Diazokomponenten der Monoazokomponenten enthalten die faserreaktive $\beta$-Sulfatoäthylsulfonyl-Gruppe.

Es wurden mit dieser Erfindung neue wasserlösliche Disazoverbindungen gefunden, die die allgemeine Formel (1)

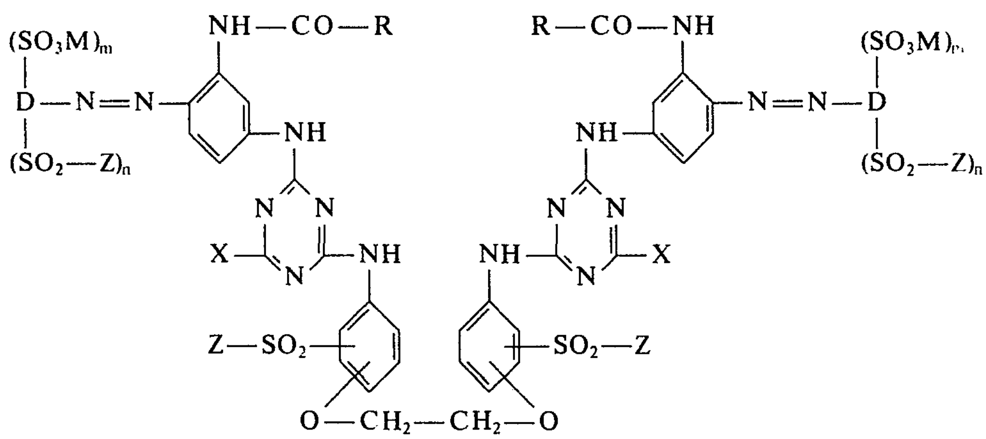

(1)

besitzen. In dieser Formel bedeuten:

m ist die Zahl 1, 2 oder 3;

n ist die Zahl Null oder 1 (wobei bei n = 0 diese Gruppe Wasserstoff bedeutet);

D ist der Rest einer Diazokomponente der Benzol- oder Naphthalinreihe, der neben den angegebenen Sulfogruppen und gegebenenfalls der angegebenen Gruppe $-SO_2-Z$ noch weitere Substituenten enthalten kann, wobei diese beiden Diazokomponenten zueinander gleich sind;

R ist die Aminogruppe oder eine durch eine oder zwei niedere Alkylgruppen mono- oder disubstituierte Aminogruppe, wobei jede dieser Alkylgruppen durch einen Phenylrest substituiert sein kann, oder ist eine Aminogruppe, die durch eine Cycloalkylgruppe von insgesamt 5 bis 8 C-Atomen substituiert ist, oder eine Aminogruppe, die durch eine niedere Alkyl- oder niedere Phenylalkylgruppe und eine Cycloalkylgruppe mit insgesamt 5 bis 8 C-Atomen disubstituiert ist, oder ist die Phenylaminogruppe, deren Benzolkern durch 1 oder 2 Substituenten aus der Gruppe Methoxy, Äthoxy, Methyl, Äthyl, Sulfo und Chlor substituiert sein kann, oder ist eine Aminogruppe, die durch eine niedere Alkylgruppe und eine Phenylgruppe substituiert ist, wobei der Benzolkern durch 1 oder 2 Substituenten aus der Gruppe Methoxy, Äthoxy, Methyl, Äthyl, Sulfo und Chlor substituiert sein kann, oder ist eine niedere Alkylgruppe, die durch ein Halogenatom, wie Fluor-, Chlor- oder Bromatom, die Cyan-, Carboxy-, Sulfo-, Hydroxy-, Sulfato-, Thiosulfato-, Phosphato- oder Acetoxygruppe oder einen Phenylrest substituiert sein kann, oder ist eine Alkenylgruppe von 2 bis 4 C-Atomen, die durch eine Carboxygruppe oder ein Chlor- oder Bromatom substituiert sein kann, wobei beide R gleiche Bedeutungen besitzen;

X ist ein Chlor- oder Fluoratom, wobei beide X gleiche Bedeutungen besitzen;

Z ist die Vinylgruppe oder eine Gruppe der Formel $-CH_2-CH_2-Y$, in welcher

Y einen anorganischen oder organischen, alkalisch eliminierbaren Rest bedeutet, wie beispielsweise die Phosphatogruppe (entsprechend der allgemeinen Formel $-OPO_3M_2$ mit M der nachstehend angegebenen Bedeutung), die Acetyloxygruppe und insbesondere die Thiosulfatogruppe (entsprechend der allgemeinen Formel $-S-SO_3M$ mit M der nachstehend angegebenen Bedeutung) und das Chloratom und vorzugsweise die Sulfatogruppe (entsprechend der allgemeinen Formel $OSO_3M$ mit M der nachstehend angegebenen Bedeutung);

M ist ein Wasserstoffatom oder das Äquivalent eines ein- oder zweiwertigen Metalls, wie eines Alkali- oder Erdalkalimetalls, wie insbesondere des Natriums, Kaliums und Calciums;

die beiden Gruppen $-SO_2-Z$, die an die beiden durch den Äthylendioxirest verbundenen Benzolkerne gebunden sind, haben gleiche Bedeutung und sind jeweils zu den Aminogruppen bevorzugt metaständig orientiert und sind ebenso bevorzugt jeweils in ortho- oder jeweils in para-Stellung zum Äthylendioxirest gebunden.

Die Angaben »niedere« bedeuten hier wie im folgenden, daß der in der Gruppe enthaltene Alkyl- oder Alkylenrest jeweils aus 1–4 C-Atomen besteht. Niedere Alkylgruppen sind vorzugsweise die Äthylgruppe und insbesondere die Methylgruppe; niedere Alkoxygruppen sind bevorzugt die Äthoxygruppe und insbesondere die Methoxygruppe. Niedere Alkylgruppen, die durch einen Phenylrest substituiert sein können, sind vorzugsweise die Benzylgruppe und die Phenäthylgruppe.

Der Formelrest R ist beispielsweise die Aminogruppe, die Äthylamino-, Propylamino-, Cyclohexylamino-, Phenylamino-, 4-Chlorphenylamino- und 3,4-Dichlorphenylamino-Gruppe, eine niedere Alkylgruppe, die Chlormethyl-, β-Chloräthyl-, β-Carboxyäthyl- und die β-Carboxyäthenylgruppe, die Cyanmethyl-, die β-Cyanäthyl-, die β-Sulfoäthyl- und die β-Thiosulfatoäthyl-Gruppe.

Beispielsweise ist der Formelrest D der Benzolrest, der außer durch eine oder zwei der angegebenen Sulfogruppen und gegebenenfalls die angegebene Gruppe $-SO_2-Z$ noch zusätzlich durch einen oder zwei Substituenten aus der Gruppe niederes Alkyl, niederes Alkoxy und Halogen, wie Chlor oder Brom, und/oder durch eine niedere Alkanoylamino-, Nitro-, Carboxy-, Carbamoyl-, Sulfamoyl-, N-(niederes Alkyl)-carbamoyl-, N-(niederes Alkyl)-sulfamoyl-, N,N-Di-(niederes Alkyl)-carbamoyl- oder N,N-Di-(niederes Alkyl)-sulfamoyl-Gruppe substituiert sein kann; bevorzugt ist der Benzolrest D außer durch eine oder zwei der angegebenen Sulfogruppen oder durch eine Sulfogruppe und die angegebene Gruppe $-SO_2-Z$ durch weitere Substituenten nicht oder zusätzlich beispielsweise durch einen oder zwei Substituenten aus der Gruppe niederes Alkyl, niederes Alkoxy und Chlor und/oder eine Carboxygruppe oder ein Bromatom substituiert. Der Formelrest D ist weiterhin beispielsweise der Naphthalinrest, der außer durch die angegebenen 1, 2 oder 3 Sulfogruppen und gegebenenfalls die angegebene Gruppe $-SO_2-Z$ noch durch weitere Substituenten substituiert sein kann, wie beispielsweise durch einen oder zwei Substituenten aus der Gruppe niederes Alkanoylamino, Benzoylamino, Chlor, niederes Alkoxy, niederes Alkyl, Carbamoyl, Sulfamoyl, durch niederes Alkyl mono- oder disubstituiertes Carbamoyl, durch niederes Alkyl mono- oder disubstituiertes Sulfamoyl und Nitro; der für D stehende Naphthalinrest ist jedoch bevorzugt durch eine, zwei oder drei der angegebenen Sulfogruppen oder eine oder zwei der angegebenen Sulfogruppen und die angegebene Gruppe der Formel $-SO_2-Z$ substituiert und durch weitere Substituenten nicht oder zusätzlich durch eine Methyl- oder Methoxygruppe oder durch eine Sulfamoyl- oder Carbamoylgruppe oder ein Chloratom substituiert.

Die neuen Disazoverbindungen können sowohl in saurer Form als auch in Form ihrer Salze vorliegen. Bevorzugt sind sie in Form der Salze, insbesondere der Alkali- und Erdalkalimetallsalze, und finden auch bevorzugt in Form dieser Salze Verwendung zum Färben (hier und im folgenden im allgemeinen Sinne und einschließlich des Bedruckens verstanden) von hydroxy- und/oder carbonamidgruppenhaltigen Materialien, insbesondere Fasermaterialien.

Von den erfindungsgemäßen Disazoverbindungen der allgemeinen Formel (1) sind diejenigen bevorzugt, in denen m die Zahl 1 oder 2 und n die Zahl Null ist, D den Benzolkern bedeutet, der außer den angegebenen Sulfogruppen noch durch einen oder zwei Substituenten aus der Gruppe Methyl, Äthyl, Methoxy, Äthoxy und Chlor substituiert sein kann, R die Aminogruppe, die Methyl-, Äthyl- oder β-Sulfoäthyl-Gruppe ist und Z die Vinyl-, bevorzugt die β-Sulfatoäthylgruppe bedeutet, oder in denen m und n beide für die Zahl 1 stehen, D den Benzolkern bedeutet, R die Aminogruppe, die Methyl-, Äthyl- oder β-Sulfoäthyl-Gruppe ist und Z die Vinylgruppe, insbesondere die β-Sulfatoäthylgruppe bedeutet, oder in denen m die Zahl 2 oder 3 ist und n die Zahl Null ist, D den Naphthalinkern bedeutet, R die Aminogruppe, die Methyl-, Äthyl- oder β-Sulfoäthyl-Gruppe ist und Z für die Vinylgruppe, insbesondere die β-Sulfatoäthylgruppe steht, oder in denen m die Zahl 1 oder 2 ist und n die Zahl 1 ist, D den Naphthalinkern bedeutet, R die Aminogruppe, die Methyl-, Äthyl- oder β-Sulfoäthyl-Gruppe ist und Z die Vinylgruppe, insbesondere die β-Sulfatoäthylgruppe darstellt.

Die vorliegende Erfindung betrifft weiterhin Verfahren zur Herstellung der obengenannten und definierten Disazoverbindungen der allgemeinen Formel (1). Diese sind dadurch gekennzeichnet, daß man eine Diaminoverbindung der allgemeinen Formel (2)

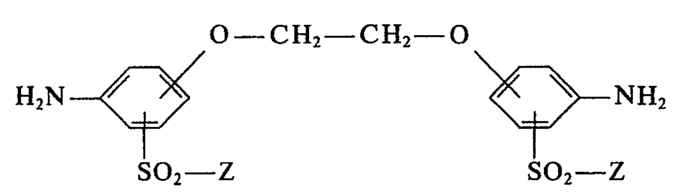

(2)

in welcher Z die obengenannte jeweils gleiche Bedeutung besitzt, wobei diese Gruppen $-SO_2-Z$ zu den Aminogruppen bevorzugt jeweils meta-ständig zueinander orientiert sind und weiterhin bevorzugt jeweils in ortho- oder jeweils in para-Stellung zum Äthylendioxirest gebunden stehen, in zweifach molarer Menge mit einer Azoverbindung der allgemeinen Formel (3)

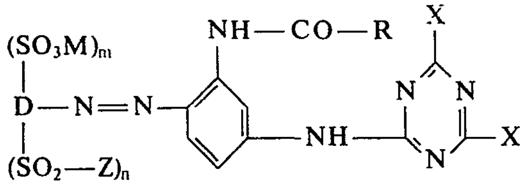 (3)

in welcher D, M, R, X, Z, m und n die obengenannten Bedeutungen besitzen, bei einem pH-Wert zwischen 4 und 8, vorzugsweise zwischen 5 und 6,5, und bei einer Temperatur zwischen 10 und 80°C, vorzugsweise zwischen 30 und 50°C, bevorzugt in wäßriger Phase, acyliert, oder daß man eine Azoverbindung der allgemeinen Formel (4)

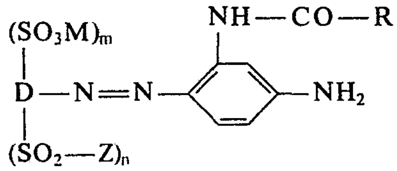 (4)

in welcher M, R, Z, m und n die obengenannten Bedeutungen haben, in zweifach molarer Menge mit einer Bis-(dihalogentriazinyl)-Verbindung der allgemeinen Formel (5)

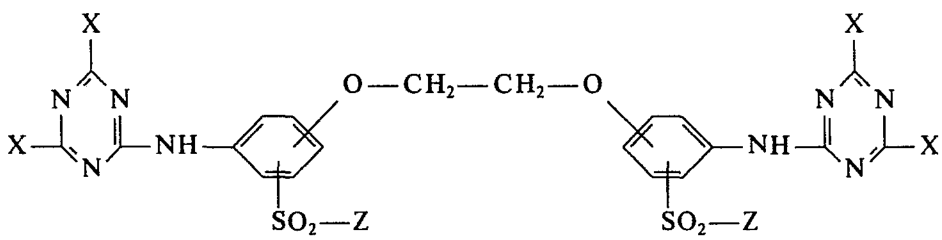 (5)

in welcher X und Z die obengenannten Bedeutungen haben und die Gruppen $-SO_2-Z$ gleiche Bedeutungen besitzen und an den beiden Benzolkernen zu den Aminogruppen bevorzugt jeweils metaständig zueinander orientiert sind und zum Äthylendioxirest bevorzugt jeweils in ortho- oder jeweils in para-Stellung gebunden stehen, bei einem pH-Wert zwischen 4 und 8, vorzugsweise zwischen 5 und 6,5, und bei einer Temperatur zwischen 10 und 80°C, vorzugsweise zwischen 30 und 50°C, bevorzugt in wäßriger Phase, acyliert.

Die bisher nicht bekannten Diaminoverbindungen der allgemeinen Formel (2) sind in der europäischen Patentanmeldung Nr. 82 106 565.3 (bzw. Deutschen Offenlegungsschrift Nr. 31 29 401) beschrieben. Sie lassen sich herstellen, indem man von einem Äthylenglykol-bis-anilin-äther ausgeht und diesen analog bekannten Verfahrensweisen zur N,N'-Bis-acetyl-Verbindung acetyliert, in diese wiederum mittels Chlorsulfonsäure und Thionylchlorid, wie zum Beispiel in Houben-Weyl, Methoden der Organischen Chemie, Bd. IX, S. 578 (1955) beschrieben, vorzugsweise bei einer Temperatur zwischen 40 und 100°C, in die beiden Benzolkerne jeweils eine Sulfochloridgruppe einführt, diese Sulfochloridgruppen mit Alkalisulfit, insbesondere Natriumsulfit, in Gegenwart von Alkalihydroxid in wäßriger Lösung bei einer Temperatur zwischen 0 und 60°C und einem ph-Wert zwischen 7 und 10 zu den Sulfinsäuren reduziert, diese wiederum mit Äthylenoxid oder Äthylenchlorhydrin in Gegenwart von wäßriger Schwefelsäure, beispielsweise analog dem in der belgischen Patentschrift 747 418 beschriebenen Verfahren, zu den $\beta$-Hydroxyäthylsulfonyl-Verbindungen oxäthyliert und diese anschließend mittels einer anorganischen Säure entacetyliert. Diese so erhaltenen Diaminoverbindungen mit den $\beta$-Hydroxyäthylsulfonyl-Gruppen entsprechen somit den Verbindungen der allgemeinen Formel (2), in welcher jedoch hier der Formelrest Z die $\beta$-Hydroxyäthyl-Gruppe ist. Diese $\beta$-Hydroxyäthylsulfonyl-Gruppen können analog bekannten Verfahrensweisen in die Gruppen $-SO_2-Z$ mit Z den für Formel (1) genannten Bedeutungen übergeführt werden, beispielsweise durch Veresterung mit einem Sulfatierungsmittel in die entsprechenden $\beta$-Sulfatoäthylsulfonyl-Gruppen.

Die als Ausgangsverbindungen dienenden Dihalogenotriazinylamino-Azoverbindungen der allgemeinen Formel (3) können analog bekannten Methoden durch Umsetzung der entsprechenden Aminoazoverbindungen mit der äquivalenten Menge an Cyanurchlorid oder Cyanurfluorid bei einer Temperatur zwischen −10°C und etwa +30°C und bei einem pH-Wert zwischen etwa 3,5 und 5,5 in vorzugsweise wäßrigem Medium hergestellt werden. Gleichermaßen lassen sich die Verbindungen der allgemeinen Formel (5) durch Acylierung der Diaminoverbindungen der allgemeinen Formel (2) mit Cyanurchlorid oder Cyanurfluorid in vorzugsweise wäßriger Lösung oder Suspension bei einer Temperatur zwischen −10°C und +20°C, vorzugsweise −5°C und +10°C, und bei einem pH-Wert zwischen 1,5 und 5,0 vorzugsweise 2,0 und 3,5, synthetisieren.

Die zur Herstellung der erfindungsgemäßen Disazoverbindungen der allgemeinen Formel (1) als Ausgangsverbindungen einsetzbaren Diazokomponenten der Benzol- oder Naphthalinreihe, die 1, 2 oder 3 Sulfogruppen und gegebenenfalls eine Gruppe der Formel $-SO_2-Z$ und gegebenenfalls andere Substituenten enthalten, sind beispielsweise Anilin-3-sulfonsäure, Anilin-4-sulfonsäure, Anilin-2,4-disulfonsäure, Anilin-2,5-disulfonsäure, 4-Methoxy-anilin-2-sulfonsäure, 2-Methyl-anilin-4-sulfonsäure, 2,5-Dichloranilin-4-sulfonsäure, 2-Methoxy-5-methyl-anilin-4-sulfonsäure, 3-Chlor-4-methyl-anilin-5-sulfonsäure, 4-Chlor-anilin-2-sulfo-5-carbonsäure, 4-β-Sulfatoäthylsulfonyl-2-sulfo-anilin, 5-β-Sulfatoäthylsulfonyl-2-sulfo-anilin, 2-Naphthylamin-3,6-disulfonsäure, 2-Naphthylamin-3,6,8-trisulfonsäure, 2-Naphthylamin-4,8-disulfonsäure, 2-Naphthylamin-5,7-disulfonsäure, 2-Naphthylamin-1,5,7-trisulfonsäure, 2-Naphthylamin-4,6,8-trisulfonsäure, 1-Naphthylamin-4,7-disulfonsäure, 1-Naphthylamin-3,7-disulfonsäure, 1-Naphthylamin-4,6,8-trisulfonsäure, 6-β-Sulfatoäthylsulfonyl-2-naphthylamin-1-sulfonsäure, 8-β-Sulfatoäthylsulfonyl-2-naphthylamin-6-sulfonsäure, 8-β-Sulfatoäthylsulfonyl-2-naphthylamin-3,6-disulfonsäure und beispielsweise die Vinylsulfonyl-, β-Thiosulfatoäthylsulfonyl-, β-Chloräthylsulfonyl-Derivate dieser β-Sulfatoäthylsulfonyl-Verbindungen.

Die Abscheidung und Isolierung der erfindungsgemäß hergestellten Verbindungen der allgemeinen Formel (1) aus den Syntheselösungen kann nach allgemein bekannten Methoden erfolgen, so beispielsweise durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann. Gegebenenfalls kann diese nach eventuellem Konzentrieren direkt als Flüssigpräparation der färberischen Verwendung zugeführt werden.

Die erfindungsgemäßen Disazoverbindungen der allgemeinen Formel (1) besitzen wertvolle Farbstoffeigenschaften, die infolge ihrer Reste Z und X faserreaktive Eigenschaften aufweisen. Die neuen Verbindungen werden bevorzugt zum Färben (im allgemeinen Sinne) von hydroxy- oder carbonamidgruppenhaltigen Materialien, beispielsweise in Form von Flächengebilden, wie Papier und Leder, oder in der Masse, wie Polyamid und Polyurethan, insbesondere von solchen Materialien in Faserform, verwendet. Die vorliegende Erfindung betrifft somit auch die Verwendung der Verbindungen der allgemeinen Formel (1) zum Färben (einschließlich Massefärbung und Druckfärbung) dieser Materialien bzw. Verfahren zum Färben solcher Materialien in an und für sich üblichen Verfahrensweisen, bei welchen eine Verbindung der allgemeinen Formel (1) als Farbmittel eingesetzt wird. Bevorzugt kommen die Materialien in Form von Fasermaterialien zur Anwendung, insbesondere in Form von Textilfasern.

Hydroxygruppenhaltige Materialien sind natürliche oder synthetische hydroxygruppenhaltige Materialien, wie beispielsweise Cellulosefasermaterialien oder deren Regeneratprodukte oder Polyvinylalkohole. Cellulosefasermaterialien sind vorzugsweise Baumwolle, aber auch andere Pflanzenfasern, wie Leinen, Hanf, Jute und Ramiefasern oder regenerierte Cellulosefasern, wie beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Mit den erfindungsgemäßen Azoverbindungen erhält man beispielsweise auf Cellulosefasern nach dem Ausziehverfahren unter Verwendung eines alkalisch reagierenden Mittels aus langer Flotte Färbungen mit sehr guter Farbausbeute. Die Verbindungen der allgemeinen Formel (1) färben Cellulosefasern unter Verwendung der bekannten Klotzverfahren ebenfalls mit ausgezeichneten Farbausbeuten, wobei diese Verbindungen mittels alkalischen Reagentien durch Verweilen bei Raumtemperatur, durch Dämpfen oder mit Trockenhitze fixiert werden können.

Nach den üblichen Druckverfahren für Cellulosefasern, wie einem einphasigen Verfahren, bspw. durch Bedrucken mit einer Natriumbicarbonat, Natriumtrichloracetat oder ein anderes säurebindendes Mittel enthaltenden Druckpaste und anschließendes Dämpfen bei 101–103°C, oder einem zweiphasigen Verfahren, wie Bedrucken mit neutraler oder schwach saurer Druckpaste und sodann entweder durch ein heißes elektrolythaltiges alkalisches Bad führen oder mit einer alkalischen elektrolythaltigen Klotzflotte überklotzen und Fixierung durch anschließendes Verweilen, Dämpfen oder Trockenhitze, erhält man ebenfalls farbstarke Drucke mit gutem Stand der Konturen und einem klaren Weißfond. Der Ausfall der Drucke ist von wechselnden Fixierbedingungen nur wenig abhängig; die Drucke zeigen daher eine sehr befriedigende Nuancenkonstanz.

Die mit den Verbindungen der allgemeinen Formel (1) erhältlichen Färbungen oder Drucke auf Cellulosefasermaterialien besitzen sehr gute Echtheiten; hiervon sind insbesondere die wichtigsten Fabrikations- und Gebrauchsechtheiten hervorzuheben, wie die Lichtechtheit, die Waschechtheit, beispielsweise bei 60°C oder 95°C, die saure und alkalische Walkechtheit, der Wasserechtheit, die Seewasserechtheit, die saure Überfärbeechtheit, die alkalische und saure Schweißechtheit sowie die Plissier-, Bügel- und Reibechtheiten.

Die Färbungen auf Polyamidfasern werden üblicherweise aus saurem Milieu ausgeführt. So kann man beispielsweise dem Färbebad Essigsäure, Essigsäure und Ammoniumacetat oder Natriumacetat zufügen, um den gewünschten pH-Wert zu erhalten. Zwecks Erreichung einer brauchbaren Egalität der Färbungen empfiehlt sich ein Zusatz an üblichen Egalisierhilfsmitteln, beispielsweise auf Basis eines Umsetzungsproduktes von Cyanurchlorid mit der dreifach molaren Menge einer Aminobenzol-und/oder einer Aminonaphthalinsulfonsäure und/oder auf Basis eines Umsetzungsproduktes von einem Fettamin, wie beispielsweise Stearylamin, mit einem Alkylenoxid, wie beispielsweise Äthylenoxid. Die Färbungen können üblicherweise bei Temperaturen von 60 bis 105°C, vorzugsweise im Ausziehverfahren, insbesondere bei Siedetemperatur des Färbebades, oder auch in einem Druckfärbeapparat bei Temperaturen bis zu 120°C ausgeführt werden.

Die nachstehenden Beispiele dienen zur Erläuterung der Erfindung. Die darin genannten Teile sind Gewichtsteile, die Prozentangaben stellen Gewichtsprozente dar, sofern nichts anderes vermerkt. Gewichtsteile stehen zu Volumenteilen im Verhältnis von Kilogramm zu Liter.

Die in den nachstehenden Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

## Beispiel 1

Eine Lösung mit einem pH-Wert von 7 von 38,3 Teilen 2-Naphthylamin-3,6,8-trisulfonsäure in 200 Teilen Wasser wird mit 20 Volumenteilen einer 5n-Natriumnitritlösung vermischt und sodann analog bekannten Verfahren mittels Salzsäure diazotiert, indem man beispielsweise dieses Gemisch langsam unter die Flüssigkeitsoberfläche einer kräftig gerührten Mischung aus 70 Teilen 31%iger wäßriger Salzsäure und 300 Teilen Eis zulaufen läßt, wobei man nach 15minütigem Weiterrühren den geringen Überschuß an salpetriger Säure mit Amidosulfonsäure zersetzt. Sodann gibt man zu diesem Ansatz eine Suspension aus 15,1 Teilen 3-Aminophenyl-harnstoff, 15 Teilen 31%iger Salzsäure und 100 Teilen Wasser. Der pH dieser Mischung wird mit konzentrierter Natronlauge langsam auf einen Wert zwischen 4,5 und 5,0 eingestellt und bis zur beendeten Kupplung gehalten. Danach wird auf 10°C abgekühlt, der Ansatz mit 20 Teilen Cyanurchlorid versetzt und bis zur beendeten Acylierungsreaktion der pH-Wert bei 4,5 bis 5,0 gehalten. Diese Syntheselösung wird von geringen wasserunlöslichen Bestandteilen abfiltriert, anschließend mit einer neutralen Lösung von 31,1 Teilen Äthylenglykol-bis-(4-amino-2-β-sulfatoäthylsulfonyl-phenyl)-äther in 100 Teilen Wasser versetzt und unter Konstanthalten des pH-Wertes bei 6,0 bis 6,5 und 50°C erwärmt.

Nach Beendigung dieser zweiten Acylierungsreaktion wird die erhaltene erfindungsgemäße Verbindung in üblicher Weise isoliert, beispielsweise durch Aussalzen mittels Natriumchlorid. Nach Abfiltrieren, Trocknen und Vermahlen erhält man ein gelbbraunes Pulver, das neben anorganischen Elektrolytsalzen, wie insbesondere Natriumchlorid, das Natriumsalz der Verbindung der Formel

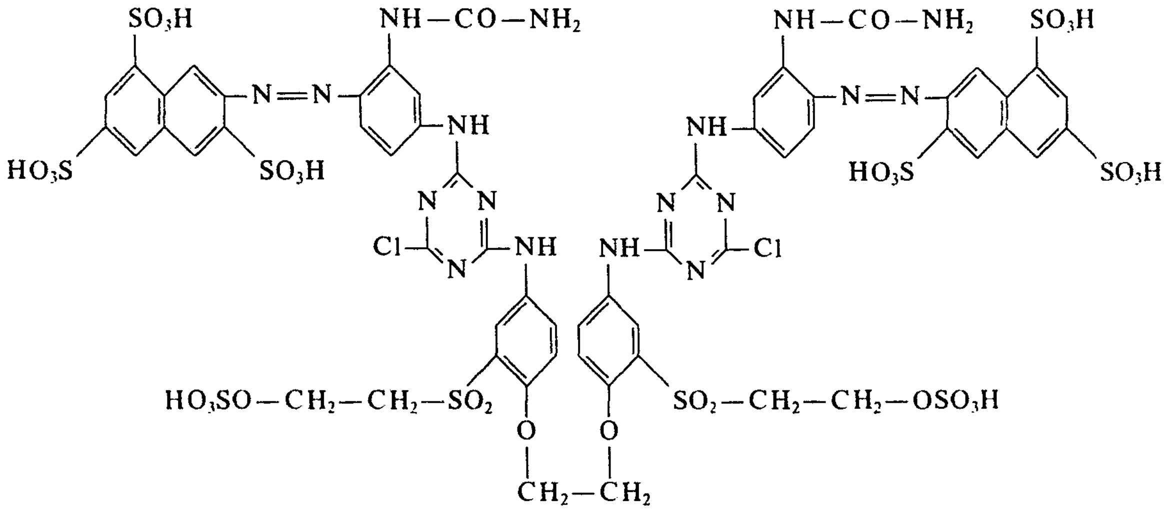

enthält. Diese zeigt sehr gute Farbstoffeigenschaften, insbesondere faserreaktive Farbstoffeigenschaften, und liefert nach den in der Technik üblichen Applikations- und Fixiermethoden, insbesondere solchen für faserreaktive Farbstoffe, auf den in der Beschreibung genannten Materialien, insbesondere Cellulosefasermaterialien, wie Baumwolle, gelbe farbstarke Färbungen und Drucke mit sehr guten Naß- und Lichtechtheitseigenschaften und einer sehr guten Fixierausbeute.

## Beispiel 2

Eine Lösung mit einem pH-Wert von 7 von 38,3 Teilen 2-Naphthylamin-4,6,8-trisulfonsäure in 200 Teilen Wasser wird gemäß den Angaben des Beispieles 1 diazotiert und sodann in gleicher Weise, wie dort beschrieben, mit 3-Aminophenyl-harnstoff gekuppelt. Nach Abkühlen auf 10°C versetzt man diesen Ansatz mit 20 Teilen Cyanurchlorid und hält bis zur beendeten Acylierungsreaktion den pH-Wert zwischen 4,5 und 5,0. Nach einer Klärfiltration gibt man zu dem Filtrat eine Lösung mit einem pH-Wert von 6,8 von 32,7 Teilen Äthylenglykol-bis-(2-amino-4-β-thiosulfatoäthylsulfonyl-phenyl)-äther in 100 Teilen Wasser hinzu, erwärmt den Ansatz langsam auf 50°C und hält den pH-Wert bis zur Beendigung der Reaktion bei 6,0.

Die erfindungsgemäße Disazoverbindung wird durch Zugabe von Natriumchlorid ausgesalzen und isoliert. Man erhält ein braungelbes Pulver, das neben Elektrolyt das Alkalimetallsalz der Verbindung der Formel

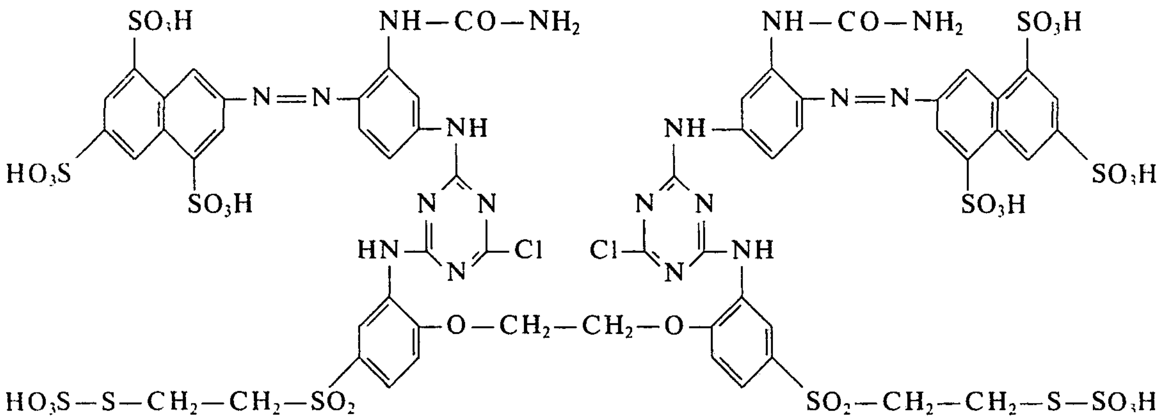

enthält. Diese Disazoverbindung zeigt sehr gute faserreaktive Farbstoffeigenschaften und liefert beispielsweise auf Cellulosefasern, wie Baumwolle, nach den in der Technik üblichen Applikations- und Fixiermethoden für Farbstoffe mit faserreaktiven Gruppen farbstarke gelbe Färbungen und Drucke mit sehr guten Naß- und Lichtechtheiten und einer sehr guten Fixierausbeute.

## Beispiel 3

Eine neutrale Lösung von 30,3 Teilen 2-Naphthylamin-4,8-disulfonsäure in 200 Teilen Wasser wird analog den Angaben des Beispieles 1 diazotiert und sodann in an und für sich üblicher Weise mit 15 Teilen 3-Amino-N-acetanilid gekuppelt. Die Kupplungsreaktion beginnt zunächst in saurer Lösung, die langsam mit Natriumcarbonat auf einen pH-Wert von 3,0 gestellt wird. Nach einstündigem Rühren wird der pH-Wert auf 4,5 bis 5,0 erhöht und bis zum Ende der Kupplungsreaktion gehalten. Die Lösung der Monoazoverbindung wird sodann auf 10°C abgekühlt, mit einer wäßrigen Lösung von 43 Teilen Äthylenglykol-bis-[4-(4,6-difluor-s-triazinyl)-amino-2-β-sulfatoäthylsulfonyl-phenyl]-äther versetzt und der pH dieses Ansatzes auf einen Wert zwischen 3,5 und 4,0 mittels Natriumcarbonat gehalten. Nach Abklingen der Acylierungsreaktion wird der Ansatz langsam auf 50°C erhitzt und der pH-Wert mittels Natriumcarbonat auf 5,0 bis 5,5 erhöht. Nach Beendigung dieser Acylierungsreaktion wird die erfindungsgemäße Disazoverbindung mit Natriumchlorid ausgesalzen, abfiltriert und getrocknet. Nach Vermahlen erhält man ein gelbbraunes, elektrolythaltiges Pulver mit dem Natriumsalz der Verbindung der Formel

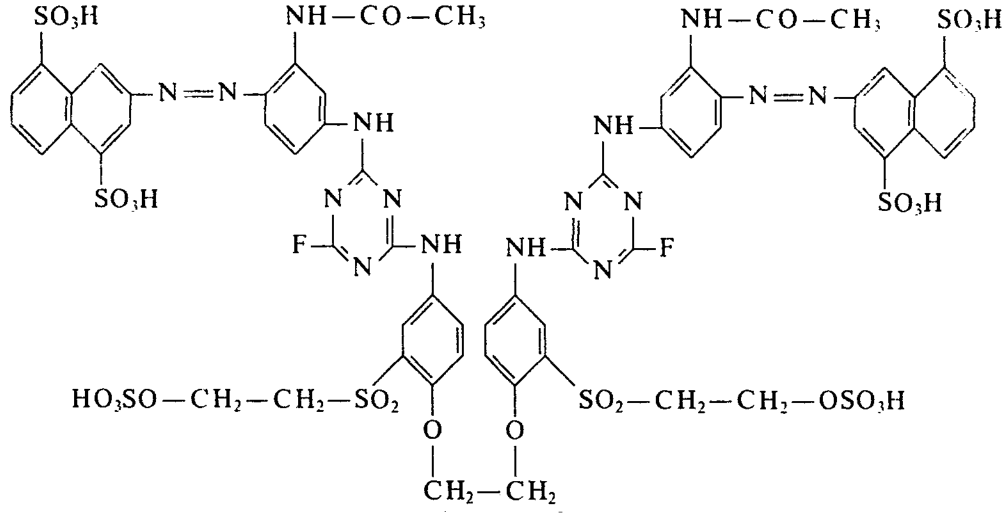

Diese erfindungsgemäße Verbindung zeigt sehr gute Farbstoffeigenschaften. Infolge ihrer faserreaktiven Gruppen liefert sie bei Anwendung nach den für faserreaktive Farbstoffe üblichen Applikations- und Fixiermethoden auf beispielsweise Cellulosefasermaterialien, wie Baumwolle, insbesondere aus wäßrigem Färbebad oder im Druck, farbstarke gelbe Färbungen und Drucke mit guten Licht- und Naßechtheitseigenschaften und einer sehr guten Fixierausbeute.

Beispiel 4

Eine Lösung von 25,3 Teilen Anilin-2,5-disulfonsäure in 100 Teilen Waser wird mit 25 Teilen 31 %iger Salzsäure eine Stunde verrührt; sodann werden 50 Teile Eis zugegeben, und durch Zulaufenlassen von 20 Volumenteilen einer wäßrigen 5n-Natriumnitritlösung wird die Diazotierung durchgeführt.

Man läßt 45 Minuten weiterrühren und zerstört die geringe Menge an überschüssiger salpetriger Säure mit etwas Amidosulfonsäure. Zur Kupplungsreaktion werden 15,1 Teile 3-Aminophenyl-harnstoff zugegeben, der pH-Wert mit Natriumcarbonat auf 5,0 eingestellt und bis zur beendeten Kupplung gehalten. Die Lösung der Monoazoverbindung wird auf 10°C abgekühlt und mit 20 Teilen Cyanurchlorid versetzt; bis zur Beendigung der Acylierungsreaktion wird der ph-Wert zwischen 4,5 und 5,0 gehalten. Nach einer Klärfiltration gibt man eine neutrale wäßrige Lösung von 32,7 Teilen Äthylenglykol-bis-(4-amino-2-β-sulfatoäthylsulfonyl-phenyl)-äther in 100 Teilen Wasser hinzu, erhitzt das Reaktionsgemisch auf 50°C und hält gleichzeitig den pH-Wert mittels Natriumcarbonat zwischen 6,0 und 6,5.

Die erfindungsgemäße Disazoverbindung wird in Form ihres Natriumsalzes durch Aussalzen mit Natriumchlorid isoliert. Sie besitzt, in Form der freien Säure geschrieben, die Formel

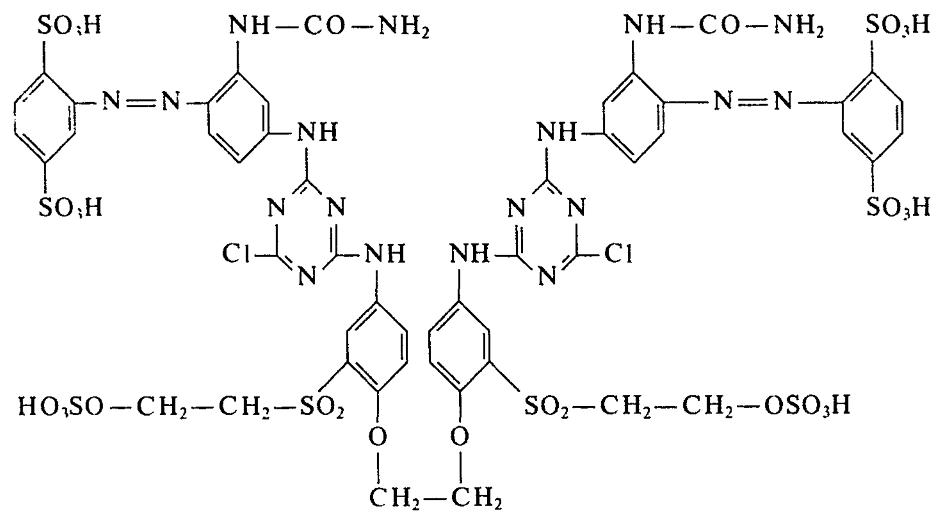

und liefert nach den in der Technik üblichen Applikations- und Fixiermethoden als faserreaktiver Farbstoff auf Cellulosefasermaterialien, wie insbesondere Baumwolle, farbstarke gelbe Färbungen und Drucke mit sehr guten Naß- und Lichtechtheitseigenschaften und einer sehr guten Fixierausbeute.

Beispiel 5

Eine neutrale Lösung von 41,1 Teilen 6-β-Sulfatoäthylsulfonyl-2-aminonaphthalin-1-sulfonsäure in 200 Teilen Wasser werden mit 20 Volumenteilen einer wäßrigen 5n-Natriumnitritlösung versetzt und zur Diazotierung langsam in ein Gemisch aus 75 Teilen Eis mit 40 Teilen 31%iger Salzsäure eingerührt. Nach weiterem Rühren von etwa 30 Minuten wird überschüssige salpetrige Säure mit wenig Amidosulfonsäure zersetzt. Zu diesem Ansatz wird eine Lösung von 24,4 Teilen 3-(β-Sulfopropionylamino)-anilin in 100 Teilen Wasser zugegeben. Der pH-Wert der Mischung wird mit verdünnter Natronlauge auf 5,0 eingestellt und bis zum Ende der Kupplungsreaktion gehalten. Anschließend wird die Lösung der Azoverbindung auf 10°C abgekühlt, mit 20 Teilen Cyanurchlorid versetzt; bis zur Beendigung der Acylierungsreaktion wird der pH-Wert weiter zwischen 5,0 und 5,5 gehalten. Nach einer Klärfiltration werden dem Filtrat 32,7 Teile Äthylenglykol-bis-(4-amino-2-β-thiosulfatoäthylsulfonylphenyl)-äther in 100 Teilen Wasser zugegeben. Das Reaktionsgemisch wird auf 50°C erhitzt und der pH-Wert bis zum Ende der Acylierungsreaktion bei 5,0—5,5 gehalten. Die Syntheselösung wird zur Trockene eingedampft und der Rückstand vermahlen.

Man erhält ein gelbbraunes Pulver, das neben anorganischen Elektrolytsalzen das Natriumsalz der Verbindungen der Formel

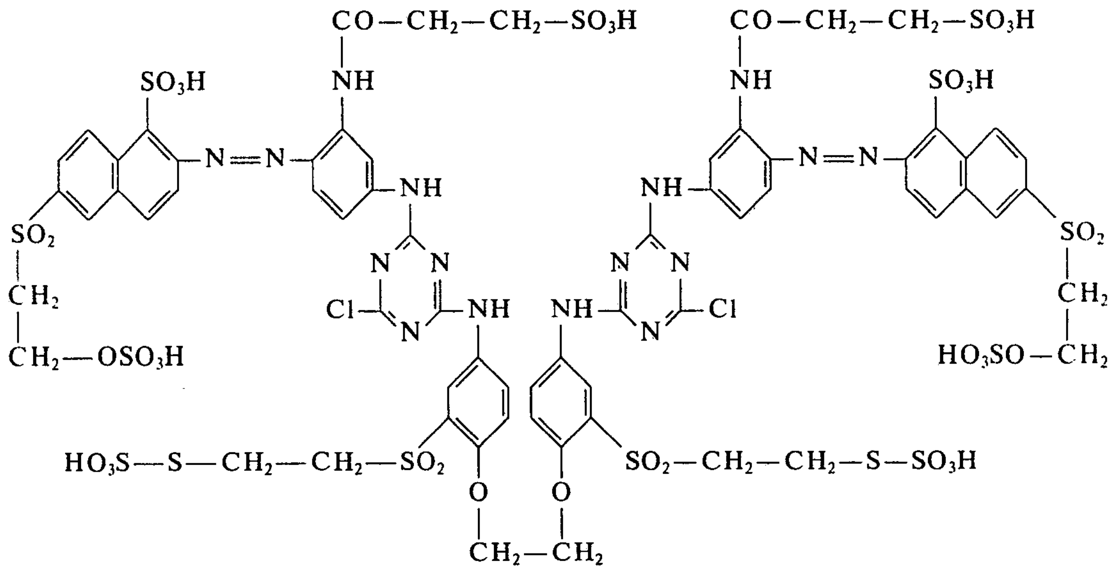

enthält. Diese stellt einen wertvollen Farbstoff mit faserreaktiven Eigenschaften dar. Er färbt beispielsweise Cellulosefasern, wie Baumwolle, insbesondere aus wäßrigem Färbebad oder im Druck, nach den in der Technik üblichen und bekannten Applikations- und Fixiermethoden in farbstarken gelben Tönen mit sehr guten Echtheitseigenschaften und einer sehr guten Fixierausbeute.

Beispiele 6 bis 20

In den nachfolgenden Tabellenbeispielen sind weitere erfindungsgemäße Disazoverbindungen mit Hilfe ihrer Komponenten entsprechend der nachstehend angegebenen allgemeinen Formel (1 A), aus denen sie zusammen mit dem Rest des Cyanurchlorids oder Cyanurfluorids aufgebaut sind, beschrieben. Sie lassen sich aus diesen Diazokomponenten, Anilin-Kupplungskomponenten, Cyanurchlorid bzw. Cyanurfluorid und den Äthylenglykol-bis-äthern in erfindungsgemäßer Weise, wie beispielsweise nach einer in den obigen Beispielen 1 bis 5 beschriebenen Verfahrensvarianten, herstellen. Sie werden vorzugsweise in Form ihrer Alkalimetallsalze, wie Natrium- oder Kaliumsalze, isoliert. Die für sie angegebenen Ausgangskomponenten sind, sofern sie eine saure Gruppe besitzen, in Form der freien Säure angegeben.

Diese erfindungsgemäßen Disazoverbindungen der Beispiele 6 bis 20 zeigen ebenfalls sehr gute faserreaktive Farbstoffeigenschaften und liefern auf den in der Beschreibung genannten Materialien, wie insbesondere Cellulosefasermaterialien, beispielsweise Baumwolle, farbstarke Färbungen und Drucke mit guten Echtheiten mit dem in dem jeweiligen Tabellenbeispiel für die Färbung auf Baumwolle angegebenen Farbton.

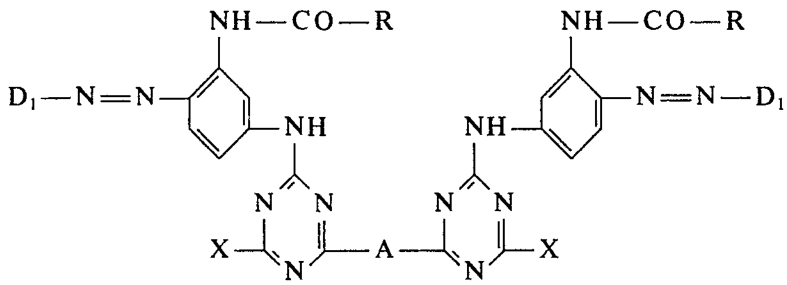

(1A)

| Bsp. | Formelrest $D_1$ entspr. Diazokomponente | Substituent X | Formelrest R | Äthylenglykoläther-Rest A | Farbton auf Baumwolle |
|---|---|---|---|---|---|
| 6 | 1,5-Disulfonaphthyl-(2) | Cl | β-Thiosulfatoäthyl | Äthylenglykol-bis-(4-amino-2-β-sulfatoäthylsulfonyl-phenyl)-äther | gelb |
| 7 | 3,6-Disulfonaphthyl-(2) | Cl | β-Chloräthyl | desgl. | gelb |
| 8 | 3,6,8-Trisulfo-naphthyl-(2) | F | β-Cyanoäthyl | desgl. | gelb |
| 9 | 4,6,8-Trisulfo-naphthyl-(2) | Cl | Chlormethyl | desgl. | gelb |
| 10 | 8-β-Sulfatoäthylsulfonyl-6-sulfo-naphthyl-(2) | Cl | Cyclohexylamino | desgl. | gelb |
| 11 | 4-β-Sulfatoäthylsulfonyl-2-sulfo-phenyl | Cl | β-Sulfoäthyl | desgl. | gelb |
| 12 | 6,8-Disulfo-naphthyl-(2) | Cl | Methyl | Äthylenglykol-bis-(2-amino-4-β-sulfatoäthylsulfonyl-phenyl)-äther | gelb |
| 13 | desgl. | Cl | Amino | desgl. | gelb |
| 14 | desgl. | Cl | Amino | Äthylenglykol-bis-(4-amino-2-β-sulfatoäthylsulfonyl-phenyl)-äther | gelb |
| 15 | 3,6,8-Trisulfo-naphthyl-(2) | Cl | Phenylamino | desgl. | gelb |
| 16 | desgl. | Cl | 3,4-Dichlor-phenylamino | desgl. | gelb |
| 17 | 3-β-Sulfatoäthylsulfonyl-6-sulfo-phenyl | Cl | β-Sulfoäthyl | desgl. | gelb |
| 18 | 3,6-Disulfo-naphthyl-(2) | Cl | β-Carboxyäthyl | desgl. | gelb |
| 19 | 4,8-Disulfo-naphthyl-(1) | Cl | Amino | desgl. | gelb |
| 20 | 3,6-Disulfo-naphthyl-(1) | Cl | Äthylamino | desgl. | gelb |

**Patentansprüche**

1. Wasserlösliche Disazoverbindungen der allgemeinen Formel (1)

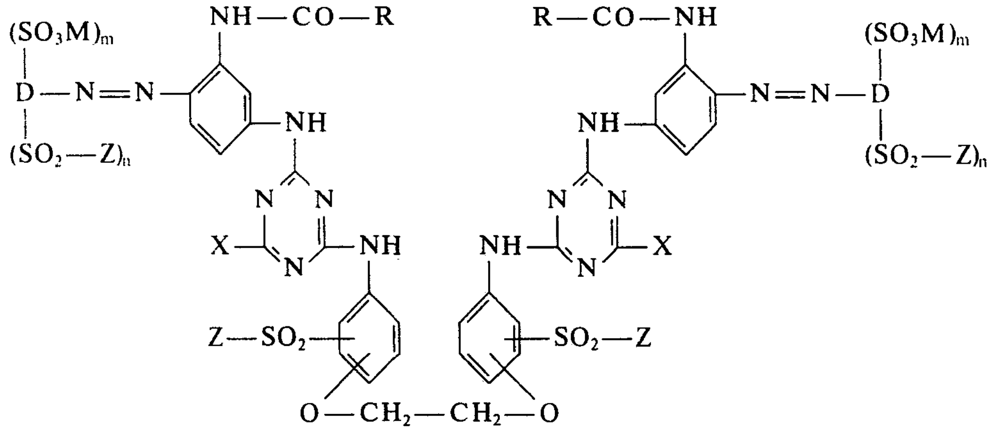

(1)

in welcher bedeuten:

m ist die Zahl 1, 2 oder 3;
n ist die Zahl 0 oder 1;
D ist der Rest einer Diazokomponente der Benzol- oder Naphthalinreihe, der neben den angegebenen Sulfogruppen und gegebenenfalls der angegebenen Gruppe $-SO_2-Z$ noch weitere Substituenten enthalten kann, wobei diese beiden Diazokomponenten zueinander gleich sind;
R ist die Aminogruppe oder eine durch eine oder zwei niedere Alkylgruppen mono- oder disubstituierte Aminogruppe, wobei jede dieser Alkylgruppen durch einen Phenylrest substituiert sein kann, oder ist eine Aminogruppe, die durch eine Cycloalkylgruppe von insgesamt 5 bis 8 C-Atomen substituiert ist, oder eine Aminogruppe, die durch eine niedere Alkyl- oder niedere Phenylalkylgruppe und eine Cycloalkylgruppe mit insgesamt 5 bis 8 C-Atomen disubstituiert ist, oder ist die Phenylaminogruppe, deren Benzolkern durch 1 oder 2 Substituenten aus der Gruppe Methoxy, Äthoxy, Methyl, Äthyl, Sulfo und Chlor substituiert sein kann, oder ist eine Aminogruppe, die durch eine niedere Alkylgruppe und eine Phenylgruppe substituiert ist, wobei der Benzolkern durch 1 oder 2 Substituenten aus der Gruppe Methoxy, Äthoxy, Methyl, Äthyl, Sulfo und Chlor substituiert sein kann, oder ist eine niedere Alkylgruppe, die durch ein Halogenatom, die Cyan-, Carboxy-, Sulfo-, Hydroxy-, Sulfato-, Thiosulfato-, Phosphato- oder Acetoxygruppe oder einen Phenylrest substituiert sein kann, oder ist eine Alkenylgruppe von 2 bis 4 C-Atomen, die durch eine Carboxygruppe oder ein Chlor- oder Bromatom substituiert sein kann, wobei beide R gleiche Bedeutungen besitzen;
X ist ein Chlor- oder Fluoratom, wobei beide X gleiche Bedeutungen besitzen;
Z ist die Vinylgruppe oder eine Gruppe der Formel $-CH_2-CH_2-Y$, in welcher
Y einen anorganischen oder organischen, alkalisch eliminierbaren Rest bedeutet;
M ist ein Wasserstoffatom oder das Äquivalent eines ein- oder zweiwertigen Metalls;

die beiden Gruppen $-SO_2-Z$, die an die beiden durch den Äthylendioxirest verbundenen Benzolkerne gebunden sind, haben gleiche Bedeutung.

2. Verbindungen nach Anspruch 1 der dort angegebenen und definierten allgemeinen Formel (1), dadurch gekennzeichnet, daß R die Aminogruppe oder die Äthylamino-, Propylamino-, Cyclohexylamino- oder Phenylaminogruppe oder eine im Phenylrest durch Chlor substituierte Phenylaminogruppe oder eine niedere Alkylgruppe ist, die durch ein Chloratom, eine Carboxygruppe, eine Cyangruppe oder eine Sulfogruppe substituiert sein kann.

3. Verbindungen nach Anspruch 1 oder 2, dadurch gekennzeichnet, daß D den Benzolrest bedeutet, der außer durch eine oder zwei der in Formel (1) angegebenen Sulfogruppen und gegebenenfalls die in Formel (1) angegebene Gruppe $-SO_2-Z$ noch zusätzlich durch einen oder zwei Substituenten aus der Gruppe niederes Alkyl, niederes Alkoxy und Halogen, wie Chlor oder Brom, und/oder durch eine niedere Alkanoylamino-, Nitro-, Carboxy-, Carbamoyl-, Sulfamoyl-, N-(niederes Alkyl)-carbamoyl-, N-(niederes Alkyl)-sulfamoyl-, N,N-Di-(niederes Alkyl)-carbamoyl- oder N,N-Di-(niederes Alkyl)-sulfamoyl-Gruppe substituiert sein kann.

4. Verbindungen nach Anspruch 1 oder 2, dadurch gekennzeichnet, daß D den Naphthalinrest bedeutet, der außer durch die in Formel (1) angegebenen 1, 2 oder 3 Sulfogruppen und gegebenenfalls die in Formel (1) angegebene Gruppe $-SO_2-Z$ noch durch einen oder zwei Substituenten aus der Gruppe niederes Alkanoylamino, Benzoylamino, Chlor, niederes Alkoxy, niederes Alkyl, Carbamoyl, Sulfamoyl, durch niederes Alkyl mono- oder disubstituiertes Carbamoyl, durch niederes Alkyl mono- oder disubstituiertes Sulfamoyl und Nitro substituiert sein kann.

5. Verbindungen nach Anspruch 1 oder 2, dadurch gekennzeichnet, daß D den Benzolrest bedeutet, der durch eine oder zwei der in Formel (1) angegebenen Sulfogruppen oder durch eine der in Formel (1) angegebenen Sulfogruppen und die Formel (1) angegebene Gruppe $-SO_2-Z$ substituiert und durch weitere Substituenten nicht substituiert oder zusätzlich durch einen oder zwei Substituenten aus der Gruppe niederes Alkyl, niederes Alkoxy und Chlor und/oder eine Carboxygruppe oder ein Bromatom substituiert ist, oder daß D den Naphthalinrest bedeutet, der durch eine oder zwei oder drei der in Formel (1) angegebenen Sulfogruppen oder durch eine oder zwei der in Formel (1) angegebenen Sulfogruppen und die in Formel (1) angegebene Gruppe $-SO_2-Z$ substituiert und durch weitere Substituenten nicht substituiert oder zusätzlich durch eine Methyl- oder Methoxygruppe oder ein Sulfamoyl- oder Carbamoylgruppe oder ein Chloratom substituiert ist.

6. Verbindungen nach Anspruch 1 der dort angegebenen und definierten allgemeinen Formel (1), dadurch gekennzeichnet, daß m die Zahl 1 oder 2 ist, n für die Zahl Null steht und D den Benzolkern bedeutet, der außer durch die eine oder zwei angegebenen Sulfogruppen noch durch einen oder zwei Substituenten aus der Gruppe Methyl, Äthyl, Methoxy, Äthoxy und Chlor substituiert sein kann.

7. Verbindungen nach Anspruch 1 der dort angegebenen und definierten allgemeinen Formel (1), dadurch gekennzeichnet, daß m und n beide für die Zahl 1 stehen und D den Benzolkern bedeutet.

8. Verbindungen nach Anspruch 1 der dort angegebenen und definierten allgemeinen Formel (1), dadurch gekennzeichnet, daß m die Zahl 2 oder 3 ist und n für die Zahl Null steht und D den Naphthalinrest bedeutet.

9. Verbindungen nach Anspruch 1 der dort angegebenen und definierten allgemeinen Formel (1), dadurch gekennzeichnet, daß m die Zahl 1 oder 2 ist und n für die Zahl 1 steht und D den Naphthalinrest bedeutet.

10. Verbindungen nach einem der Ansprüche 6 bis 9, dadurch gekennzeichnet, daß R die Aminogruppe oder die Methyl-, Äthyl- oder $\beta$-Sulfoäthyl-Gruppe ist.

11. Verbindungen nach einem der Ansprüche 1 bis 10, dadurch gekennzeichnet, daß Z die Vinylgruppe oder die $\beta$-Sulfatoäthyl-Gruppe ist.

12. Verfahren zur Herstellung der in Anspruch 1 genannten und definierten Disazoverbindungen der allgemeinen Formel (1), dadurch gekennzeichnet, daß man eine Diaminoverbindung der allgemeinen Formel (2)

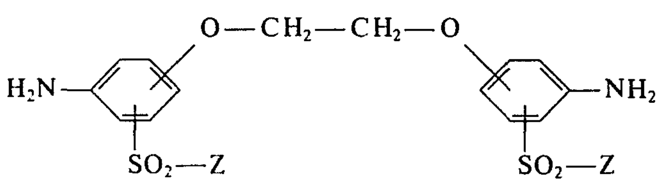
(2)

in welcher Z die in Anspruch 1 genannte jeweils gleiche Bedeutung besitzt, in zweifach molarer Menge mit einer Azoverbindung der allgemeinen Formel (3)

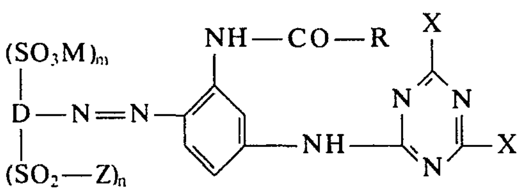
(3)

in welcher D, M, R, X, Z, m und n die in Anspruch 1 genannten Bedeutungen besitzen, bei einem pH-Wert zwischen 4 und 8 und bei einer Temperatur zwischen 10 und 80°C acyliert, oder daß man eine Azoverbindung der allgemeinen Formel (4)

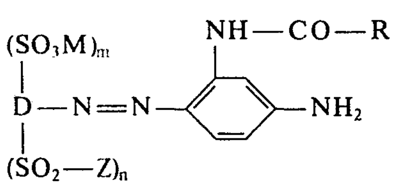
(4)

in welcher M, R, Z, m und n die in Anspruch 1 genannten Bedeutungen haben, in zweifach molarer Menge mit einer Bis-(dihalogentriazinyl)-Verbindung der allgemeinen Formel (5)

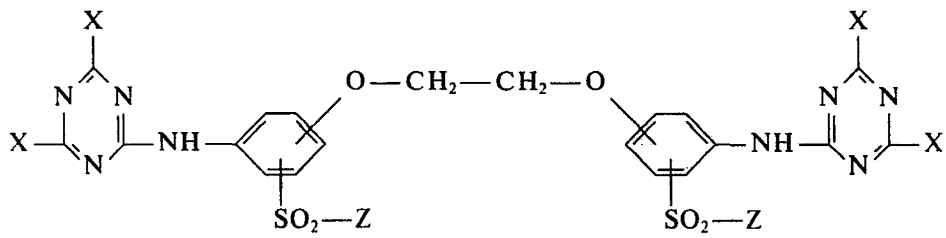

(5)

in welcher X und Z die in Anspruch 1 genannten Bedeutungen besitzen, bei einem pH-Wert zwischen 4 und 8 und bei einer Temperatur zwischen 10 und 80°C acyliert.

13. Verwendung der in Anspruch 1 genannten und definierten oder der nach einem der Verfahren von Anspruch 12 hergestellten Verbindungen der allgemeinen Formel (1) zum Färben oder Bedrucken von hydroxy- und/oder carbonamidgruppenhaltigen Materialien.

**Claims**

1. Water-soluble disazo compounds of the general formula (1)

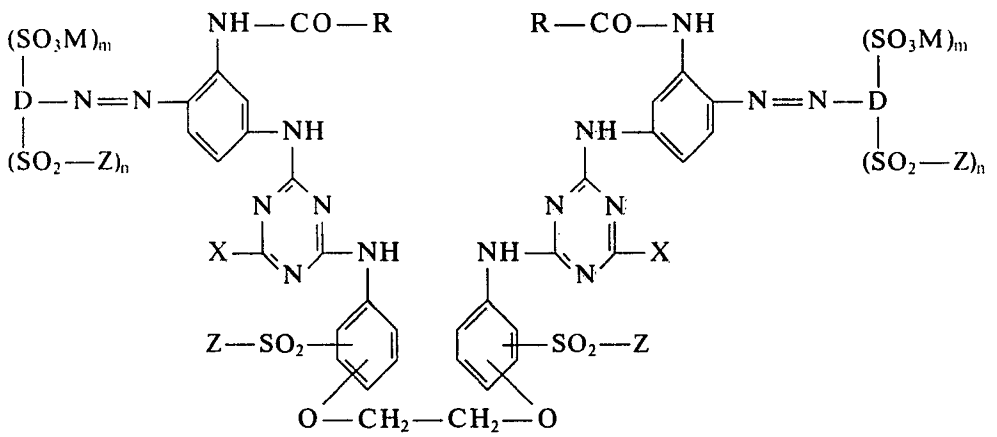

(1)

in which:

m is the number 1, 2 or 3;
n is the number zero or 1;
D is the radical of a diazo component of the benzene or naphthalene series which, in addition to the sulfo groups shown and optionally the group $-SO_2-Z$ shown, can contain further substituents, and these two diazo components are identical to each other;
R is the amino group or an amino group which is mono- or di-substituted by one or two lower alkyl groups, and each of these alkyl groups can be substituted by a phenyl radical, or is an amino group which is substituted by a cycloalkyl group having a total of 5 to 8 carbon atoms, or an amino group which is disubstituted by a lower alkyl group or a lower phenylalkyl group and a cycloalkyl group having a total of 5 to 8 carbon atoms, or is the phenylamino group the benzene nucleus of which can be substituted by 1 or 2 substituents from the group consisting of methoxy, ethoxy, methyl, ethyl, sulfo and chlorine, or is an amino group which is substituted by a lower alkyl group and a phenyl group in which the benzene nucleus can be substituted by 1 or 2 substituents from the group consisting of methoxy, ethoxy, methyl, ethyl, sulfo and chlorine, or is a lower alkyl group which can be substituted by a halogen atom, the cyano, carboxy, sulfo, hydroxy, sulfato, thiosulfato, phosphato or acetoxy group or by a phenyl radical, or is an alkenyl group of 2 to 4 carbon atoms which can be substituted by a carboxy group or a chlorine or bromine atom, and the two R have the same meanings;
X is a chlorine or fluorine atom and the two X have the same meanings;
Z is the vinyl group or a group of the formula $-CH_2-CH_2-Y$ in which
Y denotes an inorganic or organic substituent which can be eliminated under alkaline conditions;
M is a hydrogen atom or the equivalent of a monovalent or divalent metal;

the two groups $-SO_2-Z$ which are bonded to the two benzene nuclei which are linked by the ethylenedioxy radical have the same meaning.

2. Compounds according to claim 1, of the formula (1) indicated and defined there, characterized by that R is the amino group or the ethylamino, propylamino, cyclohexylamino or phenylamino group

or a phenylamino group which is substituted in the phenyl radical by chlorine, or is la lower alkyl group which can be substituted by a chlorine atom, a carboxy group, a cyano group or a sulfo group.

3. Compounds according to claim 1 or 2, characterized by that D denotes the benzene radical which can be substituted, besides by one or two of the sulfo groups shown in the formula (1) and, optionally, by the group $-SO_2-Z$ shown in the formula (1), in addition by one or two substituents from the group consisting of lower alkyl, lower alkoxy and halogen, such as chlorine or bromine, and/or by one lower alkanoylamino, nitro, carboxy, carbamoyl, sulfamoyl, N-(lower alkyl)-carbamoyl, N-(lower alkyl)-sulfamoyl, N,N-di-(lower alkyl)-carbamoyl or N,N-di-(lower alkyl)-sulfamoyl group.

4. Compounds according to claim 1 or 2, characterized by that D denotes the naphthalene radical which can be substituted, besides by the 1, 2 or 3 sulfo groups shown in the formula (1) and optionally by the group $-SO_2-Z$ shown in the formula (1), in addition by one or two substituents from the group consisting of lower alkanoylamino, benzoylamino, chlorine, lower alkoxy, lower alkyl, carbamoyl, sulfamoyl, carbamoyl mono- or di-substituted by lower alkyl, sulfamoyl mono- or di-substituted by lower alkyl, and nitro.

5. Compounds according to claim 1 or 2, characterized by that D denotes the benzene radical which is substituted by one or two of the sulfo groups shown in the formula (1) or by one of the sulfo groups shown in the formula (1) and the group $-SO_2-Z$ shown in the formula (1), and is not substituted by further substituents or is additionally substituted by one or two substituents from the group consisting of lower alkyl, lower alkoxy and chlorine and/or one carboxy group or one bromine atom, or that D denotes the naphthalene radical which is substituted by one or two or three of the sulfo groups shown in formula (1)or by one or two of the sulfo groups shown in the formula (1) and the group $-SO_2-Z$ shown in the formula (1) and is not substituted by further substituents or is additionally substituted by a methyl or methoxy group or a sulfamoyl or carbamoyl group or a chlorine atom.

6. Compounds according to claim 1, of the formula (1) indicated and defined there, characterized by that m is the number 1 or 2, n represents the number zero and D demotes the benzene nucleus which can be substituted, besides by one or two of the sulfo groups shown, by one or two substituents from the group consisting of methyl, ethyl, methoxy, ethoxy and chlorine.

7. Compounds according to claim 1, of the formula (1) indicated and defined there, characterized by that m and n both represent the number 1 and D denotes the benzene nucleus.

8. Compounds according to claim 1, of the formula (1) indicated and defined there, characterized by the m is the number 2 or 3 and n represents the number zero and D denotes the naphthalene radical.

9. Compounds according to claim 1, of the formula (1) indicated and defined there, characterized by that m is the number 1 or 2 and n represents the number 1 and D denotes the naphthalene radical.

10. Compounds according to any of claims 6 to 9, characterized by that R is the amino group or the methyl, ethyl, or $\beta$-sulfoethyl group.

11. Compounds according tho any of claims 1 to 10, characterized by that Z is the vinyl group or the $\beta$-sulfatoethyl group.

12. A process for the preparation of the disazo compounds of the formula (1) mentioned and defined in claim 1, characterized by that a diamino compound of the general formula (2)

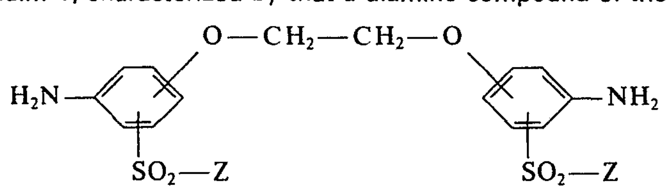

(2)

in which Z has the to each other identical — meaning as mentioned in claim 1, is acylated in a twofold molar amount with an azo compound of the general formula (3)

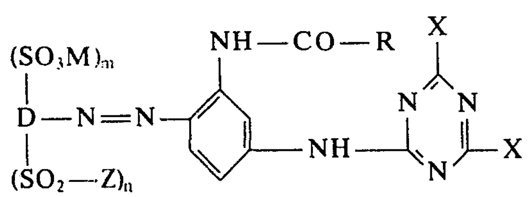

(3)

in which D, M, R, X, Z, m and n have the meanings mentioned in claim 1, at a pH value between 4 and 8 and at a temperature between 10 and 80°C, or that an azo compound of the general formula (4)

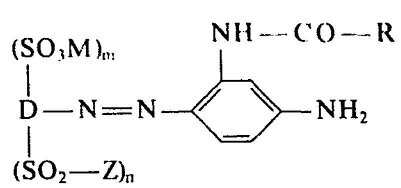

(4)

in which M, R, Z, m and n have the meanings mentioned in Claim 1, is acylated in a twofold molar amount with a bis-(dihalogenotriazinyl) compound of the general formula (5)

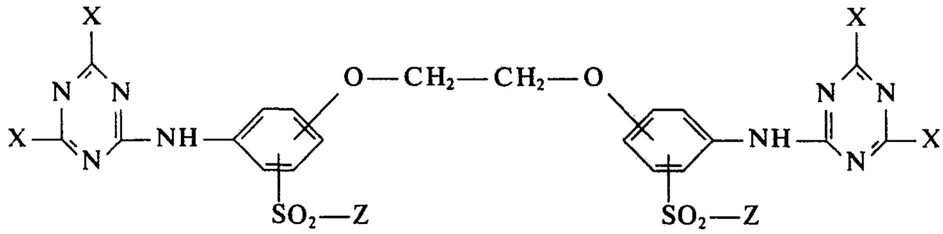

(5)

in which X and Z have the meanings mentioned in claim 1, at a pH value between 4 and 8 and at a temperature between 10 and 80°C.

13. The use of the compounds of the general formula (1) mentioned and defined in claim 1, or prepared by one of the processess according to claim 12, for dyeing or printing hydroxy- and/or carboxamide-containing materials.

**Revendications**

1. Composés disazoïques solubles dans l'eau qui répondent à la formule générale 1:

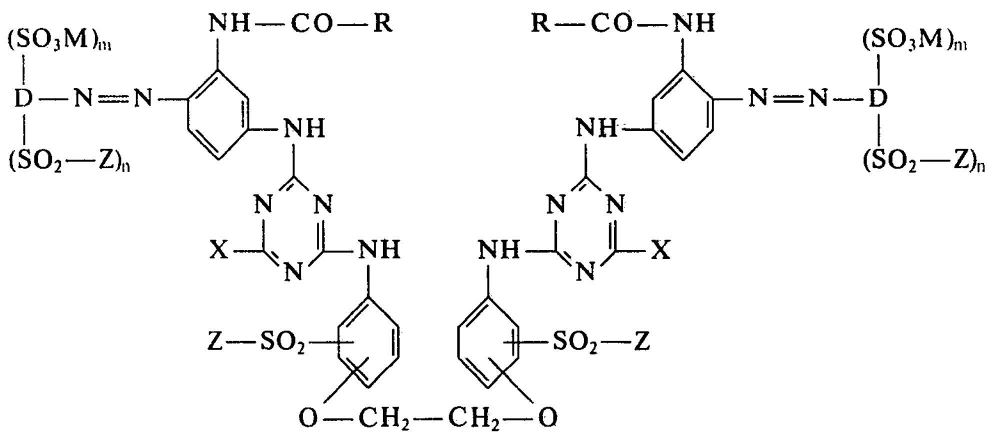

(1)

dans laquelle

m représente l'un des nombres 1, 2 et 3,
n représente le nombre 0 ou le nombre 1,
D représente le radical d'une composante de diazotation de la série benzénique ou naphtalénique qui, en plus des radicaux sulfo indiqués et, éventuellement, du radical $-SO_2-Z$ indiqué, peut porter des substituants supplémentaires, les deux composantes de diazotation étant identiques l'une à l'autre,
R représente:
- un radical amino,
- un radical amino porteur d'un ou de deux radicaux alkyles inférieurs, chacun de ces radicaux alkyles pouvant porter un radical phényle,
- un radical amino qui porte un radical cyclo-alkyle contenant au total de 5 à 8 atomes de carbone,
- un radical amino qui porte deux substituants, à savoir un radical alkyle inférieur ou un radical phénylalkyle inférieur et un radical cyclo-alkyle contenant au total de 5 à 8 atomes de carbone,
- un radical phénylamino dont le noyau benzénique peut porter 1 ou 2 substituants pris dans l'ensemble constitué par le méthoxy, l'éthoxy, le méthyle, l'éthyle, le sulfo et le chlore,
- un radical amino qui porte un alkyle inférieur et un phényle dont le noyau benzénique peut porter 1 ou 2 substituants pris dans l'ensemble constitué par le méthoxy, l'éthoxy, le méthyle, l'éthyle, le sulfo et le chlore,
- un radical alkyle inférieur qui peut porter un atome d'halogène, ou un radical cyano, carboxy, sulfo, hydroxy, sulfato, thiosulfato, phosphato, acétyloxy ou phényle; ou
- un radical alcényle en $C_2-C_4$ qui peut porter un radical carboxy ou un atome de chlore ou de brome, les deux symboles R ayant des significations identiques,

X représente un atome de chlore ou de fluor, les deux X ayant des significations identiques,

Z représente un radical vinyle ou un radical $-CH_2-CH_2-Y$ dans lequel
Y représente un radical minéral ou organique qui peut être éliminé en milieu alcalin,
M représente un atome d'hydrogène ou l'équivalent d'un métal univalent ou bivalent,

les deux radicaux $-SO_2-Z$ qui se trouvent sur les deux noyaux benzéniques reliés par le radical éthylène-dioxy étant identiques.

2. Composés selon la revendication 1 qui répondent à la formule générale 1 représentée et définie dans cette revendication 1, composés caractérisés en ce que R représente un radical amino, éthylamino, propylamino, cyclohexylamino ou phénylamino ou un radical phénylamino portant un atome de chlore sur son radical phényle, ou un radical alkyle inférieur qui peut porter un atome de chlore, un radical carboxy, un radical cyano ou un radical sulfo.

3. Composés selon l'une des revendications 1 et 2, caractérisés en ce que D représente un radical benzénique qui, en plus d'un ou deux des radicaux sulfo indiqués dans la formule (1) et, éventuellement, du radical $-SO_2-Z$ indiqué dans la formule 1, peut en outre porter un ou deux substituants pris dans l'ensemble constitué par les alkyles inférieurs, les alcoxy inférieurs et les halogènes tels que le chlore et le brome, et/ou un radical alcanoylamino inférieur, un nitro, un carboxy, un carbamoyle, un sulfamoyle, un N-(alkyl inférieur)-carbamoyle, un N-(alkyl inférieur)-sulfamoyle, un N,N-di-(alkyl inférieur)-carbamoyle ou un N,N-di-(alkyl inférieur)-sulfamoyle.

4. Composés selon l'une des revendications 1 et 2, caractérisés en ce que D représente un radical naphtalénique qui, en plus des radicaux sulfo indiqués dans la formule 1, qui peuvent être au nombre de 1, de 2 ou de 3, et éventuellement, du radical $-SO_2-Z$ indiqué dans la formule 1, peut en outre porter 1 ou 2 substituants pris dans l'ensemble constitué par les alcanoylamino inférieurs, le benzoylamino, le chlore, les alcoxy inférieurs, les alkyles inférieurs, le carbamoyle, le sulfamoyle, les carbamoyles mono- ou di-substitués (les substituants étant des alkyles inférieurs), les sulfamoyles mino- ou di-substitués (les substituants étant des alkyles inférieurs) et le radical nitro.

5. Composés selon l'une des revendications 1 et 2, caractérisés en ce que D représente un radical benzénique qui porte 1 ou 2 des radicaux sulfo indiqués dans la formyle 1, ou un radicaux sulfo indiqués dans la formule 1 et le radical $-SO_2-Z$ indiqué dans la formule 1, et ne porte pas de substituants supplémentaires ou porte, en plus, un ou deux substituants pris dans l'ensemble constitué par les alkyles inférieurs, les alcoxy inférieurs et le chlore et/ou un radical carboxy ou un atome de brome, ou D représente un radical naphtalénique qui porte 1, 2 ou 3 des radicaux sulfo indiqués dans la formule 1, ou 1 ou 2 des radixaux sulfo indiqués dans la formule 1 et le radical $-SO_2-Z$ indiqué dans la formule 1, et ne porte pas de substituants supplémentaires ou porte, en plus, un radical méthyle ou méthoxy ou un radical sulfamoyle ou carbamoyle ou un atome de chlore.

6. Composés selon la revendication 1 qui répondent à la formule générale 1 représentée et définie dans cette revendication, composés caractérisés en ce que m représente le nombre 1 ou le nombre 2, n représente le nombre 0 et D représente un noyau benzénique qui, en plus d'un ou deux des radicaux sulfo indiqués, peut porter un ou deux substituants pris dans l'ensemble constitué par le méthyle, l'éthyle, le méthoxy, l'éthoxy et le chlore.

7. Composés selon la revendication 1 qui répondent à la formule générale 1 représentée et définie dans cette revendication, composés caractérisés en ce que m et n représentent chacun le nombre 1 et D représente un noyau benzénique.

8. Composés selon la revendication 1 qui répondent à la formule générale 1 représentée et définie dans cette revendication, composés caractérisés en ce que m représente le nombre 2 ou le nombre 3, n représente le nombre 0 et D représente un radical naphtalénique.

9. Composés selon la revendication 1 qui répondent à la formule générale 1 représentée et définie dans cette revendication, composés caractérisés en ce que m représente le nombre 1 ou le nombre 2, n le nombre 1 et D un radical naphtalénique.

10. Composés selon l'une quelconque des revendications 6 à 9, caractérisés en ce que R représente un radical amino, méthyle, éthyle ou sulfo-2 éthyle.

11. Composés selon l'une quelconque des revendications 1 à 10, caractérisés en ce que Z représente un radical vinyle ou un radical sulfato-2 éthyle.

12. Procédé de préparation des composés disazoïques répondant à la formule générale 1 qui a été représentée et définie à la revendication 1, procédé caractérisé en ce qu'on acyle un composé diaminé répondant à la formule générale 2:

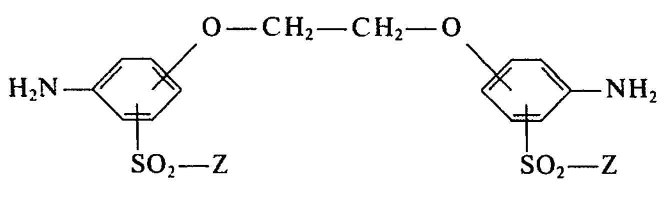

(2)

dans laquelle les Z sont identiques et ont chacun la signification donnée à la revendication 1, avec une quantité molaire double d'un composé azoïque répondant à la formule générale 3:

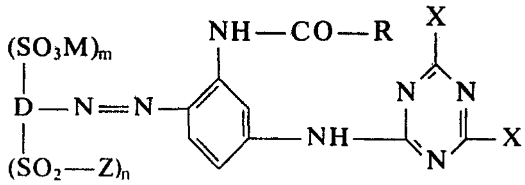

(3)

dans laquelle D, M, R, X, Z, m et n ont les significations données à la revendication 1, à un pH compris entre 4 et 8 et à une température comprise entre 10 et 80°C, ou on acyle un composé azoïque répondant à la formule générale 4:

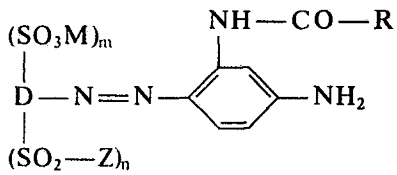

(4)

dans laquelle M, R, Z, m et n ont les significations données à la revendication 1, avec une quantité molaire double d'un composé bis-(dihalogénotriazinylique) répondant à la formule générale 5:

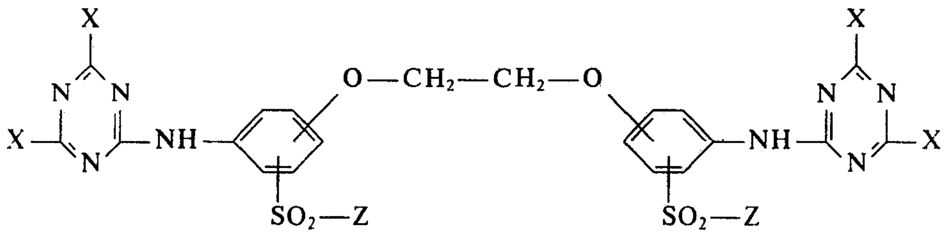

(5)

dans laquelle X et Z ont les significations données à la revendication 1, à un pH compris entre 4 et 8 et à une température comprise entre 10 et 80°C.

13. Application des composés de formule générale 1 définis à la revendication 1 ou préparés par l'un des procédés de la revendication 12, pour la teinture ou l'impression de matières contenant des radicaux hydroxy et/ou des radicaux carbamoyles.